# EUROPEAN PATENT SPECIFICATION

(11) **EP 2 950 094 B1**
(45) Date of publication and mention of the grant of the patent: **14.08.2019**
(21) Application number: 13872832.4
(22) Date of filing: 04.09.2013
(51) Int. Cl.: G01N 31/12, B01L 7/00, G01N 1/22

(54) **SAMPLE HEATING DEVICE AND ELEMENTAL ANALYZER**
PROBENERWÄRMUNGSVORRICHTUNG UND ELEMENTARANALYSATOR
DISPOSITIF DE CHAUFFAGE D'ÉCHANTILLONS ET ANALYSEUR ÉLÉMENTAIRE

(30) Priority: 24.01.2013 JP 2013011385
(43) Date of publication of application: 02.12.2015
(73) Proprietor: Shimadzu Corporation, Kyoto 604-8511 (JP)
(72) Inventor: IKEZAWA, Yoshio, Kyoto-shi, Kyoto 604-8511 (JP); MASUDA, Yuichi, Kyoto-shi, Kyoto 604-8511 (JP); IHARADA, Takeshi, Kyoto-shi, Kyoto 604-8511 (JP)
(74) Representative: Mewburn Ellis LLP
(86) International application number: PCT/JP2013/073753
(87) International publication number: WO 2014/115364

(56) References cited:
- CN-Y- 2 840 072
- JP-A- H06 249 843
- JP-A- H06 249 843
- JP-A- H08 262 000
- JP-A- H11 237 324
- JP-A- 2000 241 404
- JP-A- 2000 241 404
- JP-A- 2003 302 316
- JP-U- 3 142 280
- WIEZOREK B ET AL: "AN INFRARED PYROLYZER FOR ANALYSIS OF SOLID SAMPLES BY GAS CHROMATOGRAPHY/MASS SPECTROMETRY", REVIEW OF SCIENTIFIC INSTRUMENTS, AIP, MELVILLE, NY, US, vol. 63, no. 12, 1 December 1992 (1992-12-01), pages 5607-5612, XP000330423, ISSN: 0034-6748, DOI: 10.1063/1.1143390

## Description

### TECHNICAL FIELD

The present invention relates to a sample heating device and an elemental analyzer, and more particularly, to a sample heating device for performing pre-treatment of heating a sample such as a liquid or a solid placed on a sample boat, and an elemental analyzer.

### BACKGROUND ART

There is a sample heating device for performing pre-treatment of heating a sample such as a liquid or a solid placed on a sample boat (for example, see Patent Document 1). Such a sample heating device is used, for example, for measuring carbon content in a sample.

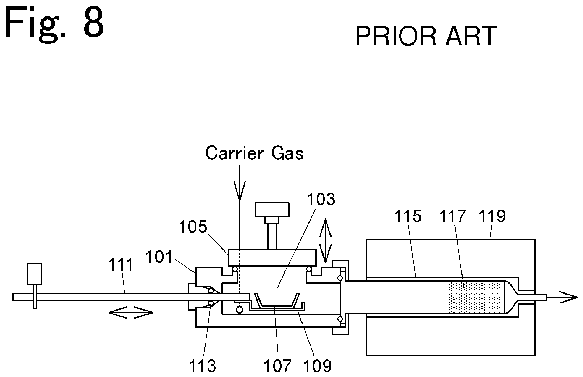

Fig. 8 is a schematic configuration diagram of a conventional sample heating device.

Oxygen serving as both carrier gas and combustion supporting gas flows through an inner space 103 of a sample injection section 101 at all times at a constant flow rate. A cover 105 is opened, and a sample boat 107 containing a sample is placed on a sample boat holder 109. Then, the cover 105 is closed. The sample boat holder 109 is fixed to a sample boat moving rod 111. To maintain the air-tightness of the inner space 103, a sealing member 113 is arranged between the sample boat moving rod 111 and the sample injection section 101.

A combustion tube 115 is connected to the inner space 103 of the sample injection section 101. An oxidation catalyst 117 is arranged inside the combustion tube 115. The combustion tube 115 is heated by a heating furnace 119 to a predetermined temperature.

The sample boat 107 is moved into the combustion tube 115 together with the sample boat holder 109 by operation of the sample boat moving rod 111. The sample contained in the sample boat 107 is heated inside the combustion tube 115. The carbon content of the sample is oxidized and decomposed, and carbon dioxide is produced. The carbon dioxide produced is led to a carbon dioxide detector together with carrier gas. The carbon dioxide detector measures the amount of carbon dioxide produced.

After the measurement, the sample boat 107 is pulled back to the inner space 103 by operation of the sample boat moving rod 111. Then the cover 105 is opened, and the sample boat 107 is removed from the inner space 103.

While the measurement is performed, the tip end side of the sample boat moving rod 111 stays inside the combustion tube 115, and is heated to an extremely high temperature. If, after the measurement is ended, the sample boat 107 is pulled back to the inner space 103 with the tip end side of the sample boat moving rod 111 heated to an extremely high temperature, the sealing member 113 of the sample boat moving rod 111 is damaged.

To prevent damage to the sealing member 113, the sample boat moving rod 111 is pulled back by about half the stroke (hereinafter referred to as a "cooling position"), for example, and is held at the position for 30 seconds (hereinafter referred to as a "waiting time" or a "cooling time"). The temperature of the tip end side of the sample boat moving rod 111 is reduced during the waiting time at the cooling position. After the waiting time has elapsed, the sample boat 107 is pulled back to the inner space 103. This waiting time needs to be determined in advance by way of experiment. Also, this waiting time is dependent on the set temperature of the heating furnace 119.

Patent document 2 describes an electrical pyrolysis comprehensive evaluating instrument. The instrument includes a monolithic computer in which a control program for controlling the operation of the instrument is stored in the circuit of the instrument. A peripheral circuit of the CPU of the monolithic computer comprises an A/D converting circuit composed of a 16 bit serial A/D converter, and an D/A output circuit composed of a highly integrated D/A converting chip which is a DAC of SPI serial input and 12 bit voltage output, and one chip can be provided with 4 path outputs. A temperature control system comprises a heating furnace filament, a thermocouple signal conditioning and digital converting circuit, a control logic interface and a D/A converting circuit. The D/A converting circuit is connected with a voltage regulating module which controls the temperature of the heating furnace filament. The monolithic computer for storing the program also receives a control instruction from an upper PC to carry out operation.

### PRIOR ART DOCUMENTS

### PATENT DOCUMENTS

Patent Document 1: Japanese Patent No. 2531427
Patent Document 2: Chinese Utility Model No. 2840072 Y

### SUMMARY OF THE INVENTION

### PROBLEMS TO BE SOLVED BY THE INVENTION

The present invention has its aim to prevent damage to a sealing member of a sample boat moving rod in a sample heating device where a sample boat is to be placed inside a combustion tube by operation of the sample boat moving rod.

### MEANS FOR SOLVING PROBLEM

According to a first aspect, the present invention provides a sample heating device as set out in claim 1. Further aspects of the invention are set out in the remaining claims.

### EFFECT OF THE INVENTION

According to one aspect of the present invention, the sample heating device includes the temperature sensor for measuring the temperature of the sample boat moving rod. The aspect of the sample heating device of the present invention may thereby grasp the temperature of the sample boat moving rod, at the contact position with the sealing member, based on a measured temperature value of the temperature sensor, and may thus prevent damage to the sealing member of the sample boat moving rod.

Furthermore, according to the one aspect of the sample heating device of the present invention, since the temperature of the sample boat moving rod at the contact position with the sealing member may be grasped, there is no need to set an unnecessarily long waiting time at the time of pulling back the sample boat moving rod. Accordingly, the aspect of the sample heating device of the present invention may reduce the time for pulling back the sample boat from the combustion tube while preventing damage to the sealing member of the sample boat moving rod.

In the one aspect of the sample heating device of the present invention, by further including the control section for moving the sample boat moving rod while controlling, based on a measured temperature value of the temperature sensor, an amount of pull-back in such a way that the sample boat moving rod contacts the sealing member at a temperature at or below a predetermined temperature, at a time of pulling the sample boat moving rod which is located on a side of the combustion tube back to a side of the sample injection section, and by the boat operation mechanism including a motor for moving the sample boat moving rod according to an instruction from the control section, the sample heating device can reduce the time for pulling back the sample boat from the combustion tube, while automatically preventing damage to the sealing member of the sample boat moving rod.

An aspect of a sample heating device which does not form part of the present invention controls the operation of the driving means for moving the sample boat moving rod by the control section, and causes the sample boat moving rod to stay at a cooling position during a cooling time according to a temperature of the heating furnace, at a time of pulling the sample boat moving rod which is located on a side of the combustion tube back to a side of the sample injection section. Accordingly, this aspect of the sample heating device may eliminate insufficient cooling of the sample boat moving rod caused by an erroneous operation of an operator, and may prevent damage to the sealing member of the sample boat moving rod caused by insufficient cooling of the sample boat moving rod.

An elemental analyzer of the present invention uses the sample heating device of the present invention, and may thus reduce the measurement time while preventing damage to the sealing member of the sample boat moving rod.

### BRIEF DESCRIPTION OF THE DRAWING

Fig. 1 is a schematic configuration diagram for describing an embodiment of an aspect of a sample heating device.
Fig. 2 is a schematic cross-sectional diagram showing, in an enlarged manner, a hermetic seal of a sample boat moving rod of the embodiment and its periphery.
Fig. 3 is a flow chart for describing an operation at the time of pulling back the sample boat moving rod moved to the side of a combustion tube.
Fig. 4 is a schematic configuration diagram for describing a sample heating device not forming part of the present invention.
Fig. 5 is a schematic configuration diagram for describing an embodiment of an elemental analyzer.
Fig. 6 is a schematic configuration diagram for describing another sample heating device not forming part of the present invention.
Fig. 7 is a schematic configuration diagram for describing an elemental analyzer not forming part of the present invention.
Fig. 8 is a schematic configuration diagram of a conventional sample heating device.

### MODE FOR CARRYING OUT THE INVENTION

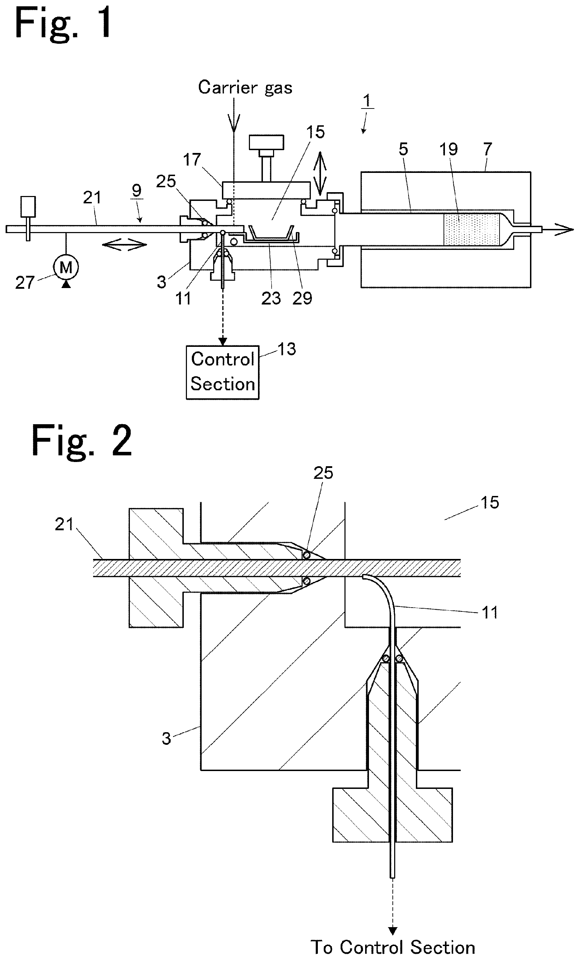

Fig. 1 is a schematic configuration diagram for describing an embodiment of an aspect of a sample heating device. Fig. 2 is a schematic cross-sectional diagram showing, in an enlarged manner, a hermetic seal of a sample boat moving rod of the embodiment and its periphery.

A sample heating device 1 includes a sample injection section 3, a combustion tube 5, a heating furnace 7, a boat operation mechanism 9, a temperature sensor 11, and a control section 13.

The sample injection section 3 includes an inner space 15 into which carrier gas is supplied, and a sample boat gateway opening/closing mechanism 17.

The combustion tube 5 is connected to the inner space 15 of the sample injection section 3. The combustion tube 5 is made of, for example, quartz glass. An oxidation catalyst 19 is arranged inside the combustion tube 5. Carrier gas flows into the combustion tube 5 from the inner space 15.

The heating furnace 7 is for heating the combustion tube 5 to a predetermined temperature.

The boat operation mechanism 9 includes a sample boat moving rod 21, a sample boat holder 23, a sealing member 25, and a motor 27 (driving means). The boat operation mechanism 9 is for moving into the combustion tube 5 a sample boat 29 arranged at a sample boat installation position inside the inner space 15 of the sample injection section 3. The sample boat moving rod 21 is arranged in a manner allowing operation from outside the inner space 15. The sample boat holder 23 is for holding the sample boat 29.

The sealing member 25 is arranged between the sample injection section 3 and the sample boat moving rod 21, and maintains the air-tightness of the inner space 15. The sealing member 25 is, for example, a PTFE (polytetrafluoroethylene) O-ring.

The motor 27 is for moving the sample boat moving rod 21 according to an instruction from the control section 13. Illustration of a mechanism for moving the sample boat moving rod 21 according to rotation of the motor 27 is omitted.

The sample boat 29 is made of, for example, ceramic.

The temperature sensor 11 is for measuring the temperature of the sample boat moving rod 21. The temperature sensor 11 is configured from, for example, a thermocouple abutted against the sample boat moving rod 21 inside the inner space 15. The temperature sensor 11 is arranged near the contact position of the sample boat moving rod 21 and the sealing member 25.

The control section 13 controls the driving of the motor 27. At the time of pulling the sample boat moving rod 21 moved to the side of the combustion tube 5 back to the side of the sample injection section 3, the control section 13 moves the sample boat moving rod 21 while controlling, based on a measured temperature value of the temperature sensor 11, the amount of pull-back in such a way that the sample boat moving rod 21 contacts the sealing member 25 at a temperature at or below a predetermined temperature.

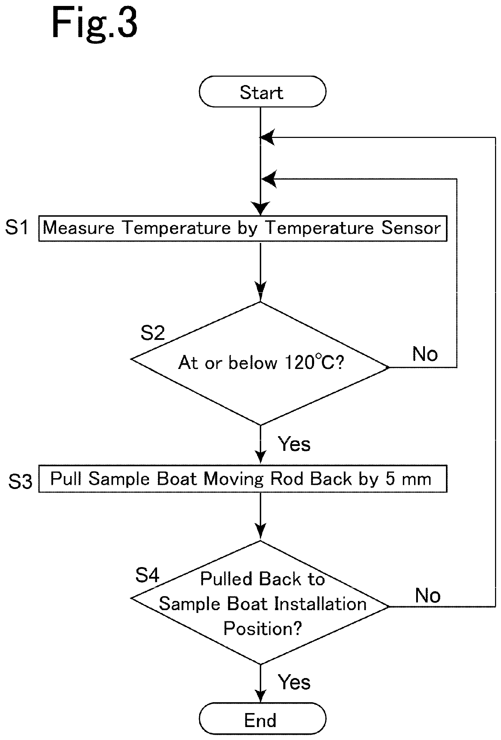

Fig. 3 is a flow chart for describing an operation at the time of pulling back the sample boat moving rod moved to the side of a combustion tube.

After the measurement is ended, the control section 13 performs temperature measurement by the temperature sensor 11 in order to pull the sample boat moving rod 21 moved to the side of the combustion tube 5 back to the side of the sample injection section 3 (step S1).

The control section 13 determines whether the temperature of the sample boat moving rod 21, at the position that is in contact with the temperature sensor 11, is at or below a temperature that is set in advance, such as 120°C (step S2). At the sample boat moving rod 21, that contact position with the temperature sensor 11 is spaced apart from the contact position with the sealing member 25, but if the temperature at the contact position with the temperature sensor 11 is measured, the temperature at the contact position with the sealing member 25 may be grasped. Whether the temperature of the sample boat moving rod 21, at the contact position with the sealing member 25, is a temperature at or below a predetermined temperature is thereby determined.

When determining that the temperature of the sample boat moving rod 21, at the contact position with the temperature sensor 11, is at or below 120°C (Yes), the control section 13 drives the motor 27, and causes the sample boat moving rod 21 to move toward the sample injection section 3 by a distance that is set in advance, such as 5 mm (millimeters) (step S3).

The control section 13 determines whether the sample boat moving rod 21 is pulled back to the sample boat installation position (step S4).

When determining that the sample boat moving rod 21 is not pulled back to the sample boat installation position (No), the control section 13 returns to step S1 and performs measurement by the temperature sensor 11.

When determining in step S2 that the temperature of the sample boat moving rod 21, at the contact position with the temperature sensor 11, is higher than 120°C (No), the control section 13 returns to step S1 and performs temperature measurement by the temperature sensor 11. The temperature of the sample boat moving rod 21 is reduced while processes of steps S1 and S2 are being repeated by the control section 13. When the temperature of the sample boat moving rod 21, at the contact position with the temperature sensor 11, falls to or below 120°C (Yes), the control section 13 proceeds to step S3 and moves the sample boat moving rod 21 toward the sample injection section 3 by 5 mm (step S3).

When determining in step S4 that the sample boat moving rod 21 is pulled back to the sample boat installation position (Yes), the control section 13 ends the operation of pulling back the sample boat moving rod 21.

As described above, the sample heating device 1 includes the temperature sensor 11 for measuring the temperature of the sample boat moving rod 21. The sample heating device 1 may thereby be able to grasp the temperature of the sample boat moving rod 21, at the contact position with the sealing member 25, based on the measured temperature value of the temperature sensor 11, and there is no need for setting an unnecessarily long waiting time to be back. Accordingly, the sample heating device 1 is able to reduce the time for pulling back the sample boat 29 from the combustion tube 5 while preventing damage to the sealing member 25 of the sample boat moving rod 21. The sample heating device 1 may, thus, be able to reduce the measurement time compared with a case where a sufficiently long waiting time is set.

Now, as described above, in the case where a conventional sample heating device shown in Fig. 8 is used, a cooling position and a waiting time to be used at the time of pulling back the sample boat 107 from the combustion tube 115 have to be set. This waiting time is dependent on the set temperature of the heating furnace 119, and thus, the waiting time has to be changed every time the set temperature of the heating furnace 119 is changed. Also, if the set temperature of the heating furnace 119 is high, a plurality of cooling positions have to be provided.

The sample heating device of the present invention is capable of grasping the temperature of the sample boat moving rod, at the contact position with the sealing member, based on the measured temperature value of the temperature sensor, and thus, there is no need to provide the cooling position and the waiting time described above. Accordingly, the sample heating device of the present invention may achieve the shortest pull-back time even when the set temperature of the heating furnace is changed or the set temperature of the heating furnace is high.

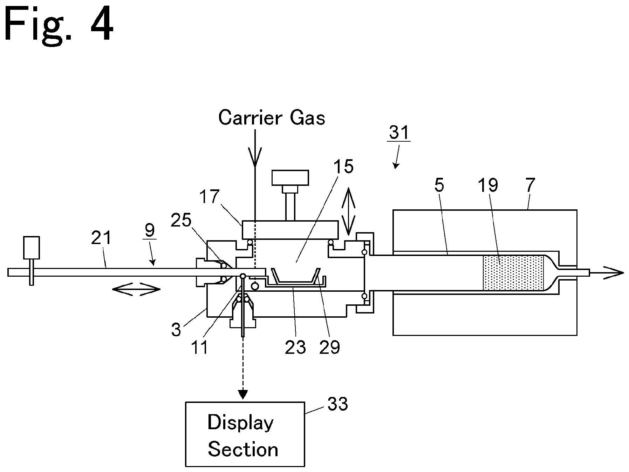

Fig. 4 is a schematic configuration diagram for describing a sample heating device not forming part of the present invention. In Fig. 4, parts serving the same functions as in Fig. 1 are denoted with the same reference signs, and detailed description thereof is omitted.

When compared with the sample heating device 1 shown in Fig. 1, the sample heating device 31 does not include the control section 13 and the motor 27, but includes a display section 33. The display section 33 is for displaying the measured temperature value of the temperature sensor 11.

Movement of the sample boat moving rod 21 is performed by an operator. At the time of pulling the sample boat moving rod 21 moved to the side of the combustion tube 5 back to the side of the sample injection section 3 after the measurement is ended, the operator operates the sample boat moving rod 21 while checking the temperature displayed on the display section 33.

The operator stops the pull-back operation for the sample boat moving rod 21 when the temperature displayed on the display section 33 exceeds a temperature at which the sealing member 25 is not damaged, for example, 120°C. After checking that the temperature displayed on the display section 33 has fallen to or below 120°C, the operator gradually pulls back the sample boat moving rod in steps of, for example, 5 mm.

Finally, the operator pulls back the sample boat moving rod 21 to the sample boat installation position, and ends the pull-back operation for the sample boat moving rod 21. The operator may thus perform the pull-back operation for the sample boat moving rod 21 in a shortest pull-back time without damaging the sealing member 25.

Additionally, in the sample heating device described above, the display section 33 is for displaying the measured temperature value of the temperature sensor 11, but it may also include a function of displaying whether the temperature is a temperature at which the sealing member 25 is not damaged by other means than the temperature value. For example, the display section 33 may display, by turning on or off of a lamp, whether the temperature of the sample boat moving rod 21, at the contact position with the temperature sensor 11, and moreover, the contact position with the sealing member 25, is at or below a pre-set temperature at which the sealing member 25 is not damaged. Also in this case, the operator performs the pull-back operation for the sample boat moving rod 21 based on the display on the display section 33.

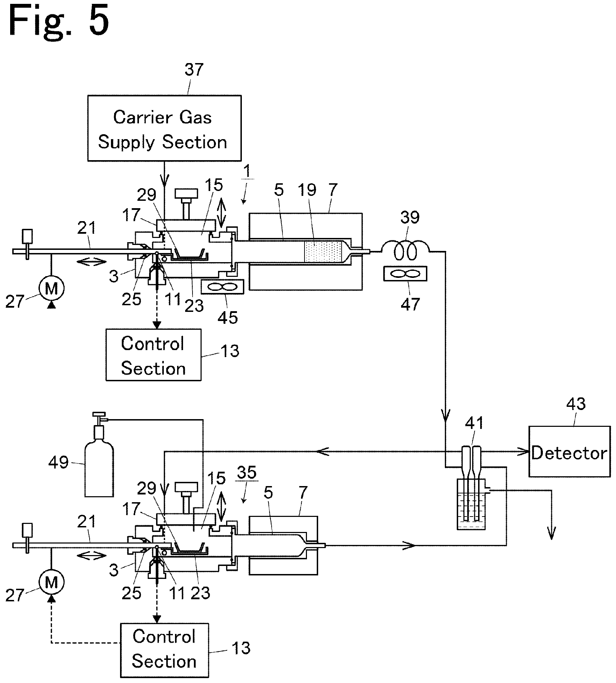

Fig. 5 is a schematic configuration diagram for describing an embodiment of an elemental analyzer. In this embodiment, an elemental analyzer of the present invention is applied to a TOC (Total Organic Carbon) meter.

A TOC meter includes a sample heating device 1 for TC (Total Carbon) measurement, and a sample heating device 35 for IC (Inorganic Carbon) measurement. The sample heating device 1 and the sample heating device 35 are connected in series.

The sample heating device 1 for TC measurement is the same as the one described with reference to Fig. 1. The furnace temperature of the heating furnace 7 is set to, for example, 900°C. Carrier gas (oxygen) serving also as combustion supporting gas is continuously injected from a carrier gas supply section 37 into the inner space 15 at the flow rate of, for example, 500 mL/min (milliliter per minute). The carrier gas flows through the sample heating device 1, a cooling tube 39, a dehumidifier section 41, the sample heating device 35, and again through the dehumidifier section 41 to, for example, a detector 43 configured from a non-dispersive infra-red (NDIR) gas analyzer. Additionally, the reference signs 45 and 47 refer to cooling fans.

At the sample heating device 1 for TC measurement, the sample boat 29 containing a sample enters the inner space 15 from the sample boat gateway opening/closing mechanism 17 of the sample injection section 3, and is placed on the sample boat holder 23. A standby time of 120 seconds, for example, is provided after closing of the sample boat gateway opening/closing mechanism 17. The air which has flown into the analyzer flow path through the inner space 15 at the time of opening/closing of the sample boat gateway opening/closing mechanism 17 is thereby completely discharged to outside the analyzer. After it is confirmed that the baseline of the detector 43 has become stable, the control section 13 drives the motor 27 to move the sample boat moving rod 21, and inserts the sample boat 29 into the combustion tube 5. Additionally, confirmation regarding the baseline of the detector 43 may be omitted, and a configuration where the sample boat 29 is inserted into the combustion tube 5 after the lapse of a predetermined time after closing of the sample boat gateway opening/closing mechanism 17 may alternatively be adopted.

Organic substances in the sample are evaporated or decomposed inside the combustion tube 5 and reach the oxidation catalyst 19 together with the carrier gas containing oxygen, and all the organic substances are oxidized to become carbon dioxide gas by the catalytic action. This carbon dioxide gas is led to the detector 43 together with the carrier gas through the cooling tube 39, the dehumidifier section 41, the sample heating device 35, and again through the dehumidifier section 41, and TC in the sample is measured. The NDIR detector 43 takes the carbon dioxide gas which has flown in as the peak above the baseline, and measures the amount of carbon dioxide from the area. After the measurement is ended, the control section 13 pulls back the sample boat moving rod 21 by the pull-back operation described with reference to Fig. 3.

The sample heating device 35 for IC measurement has basically the same structure as the sample heating device 1 for TC measurement. Parts of the sample heating device 35 for IC measurement serving the same functions as those of the sample heating device 1 for TC measurement are denoted with the same reference signs as for the sample heating device 1 for TC measurement.

At the sample heating device 35 for IC measurement, the sample boat 29 containing a sample enters the inner space 15 from the sample boat gateway opening/closing mechanism 17 of the sample injection section 3, and is placed on the sample boat holder 23. A standby time of 120 seconds, for example, is provided after closing of the sample boat gateway opening/closing mechanism 17. Inorganic acid is added from an acid dispenser to the sample in the sample boat 29 after the lapse of the standby time. As the acid, phosphoric acid, which is non-volatile acid, is suitably used. After it is confirmed that the baseline of the detector 43 has become stable, the control section 13 drives the motor 27 to move the sample boat moving rod 21, and inserts the sample boat 29 into the combustion tube 5.

At the sample heating device 35 for IC measurement, the heating temperature of the heating furnace 7 is set to a relatively low temperature of 200°C, for example, compared with the heating furnace 7 of the sample heating device 1 for TC measurement. Here, reaction between the IC component in the sample and the acid is promoted, and furthermore, due to stirring and ejection by heating, carbon dioxide is produced by conversion based on reaction, and is swiftly extracted into the gas phase. The carbon dioxide gas which has been extracted is led, together with the carrier gas, to the detector 43 through the dehumidifier section 41, and IC in the sample is measured in the same manner as in TC measurement. Supply of the carrier gas to the sample heating device 35 for IC measurement is performed from the carrier gas supply section 37 through the sample heating device 1 for TC measurement, the cooling tube 39, and the dehumidifier section 41. After the measurement is ended, the control section 13 pulls back the sample boat moving rod 21 by the pull-back operation described with reference to Fig. 3.

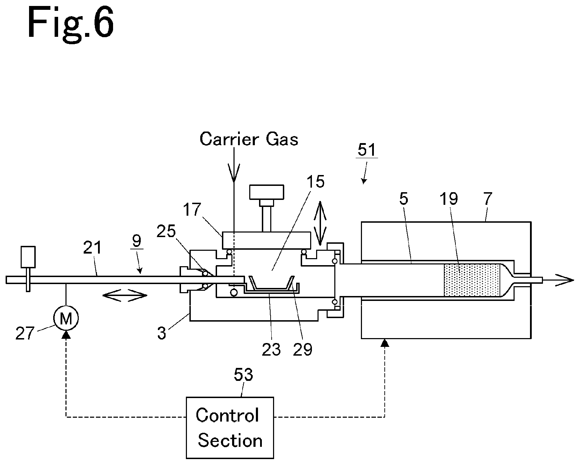

Fig. 6 is a schematic configuration diagram for describing another sample heating device not forming part of the present invention. In Fig. 6, parts serving the same functions as in Fig. 1 are denoted with the same reference signs, and detailed description thereof is omitted.

A sample heating device 51 includes a sample injection section 3, a combustion tube 5, a heating furnace 7, a boat operation mechanism 9, and a control section 53. The structures of the sample injection section 3, the combustion tube 5, the heating furnace 7, and the boat operation mechanism 9 of the sample heating device 51 are approximately the same as those of the sample heating device 1 shown in Fig. 1. However, when compared with the sample heating device 1 shown in Fig. 1, the sample heating device 51 does not include the temperature sensor 11.

The control section 53 controls driving of the motor 27, and the temperature of the heating furnace 7. At the time of pulling the sample boat moving rod 21 moved to the side of the combustion tube 5 back to the side of the sample injection section 3, the control section 53 controls driving of the motor 27 to move the sample boat moving rod 21 in such a way that the sample boat moving rod 21 is kept unmoved during a cooling time according to the temperature of the heating furnace 7.

The control section 53 controls the operation of the heating furnace 7 so that the heating furnace 7 is at a set temperature. Additionally, control of the temperature of the heating furnace 7 may alternatively be performed by a control system different from the control section 53. In this case, at least one of the set temperature information and the measured temperature information of the heating furnace 7 is input to the control section 53.

An operation at the time of pulling back the sample boat moving rod moved to the side of the combustion tube will be described.

After measurement is ended, the control section 13 controls driving of the motor 27, and pulls the sample boat moving rod 21 moved to the side of the combustion tube 5 back to the cooling position. The cooling position, for example, is a position at about half the stroke of the sample boat moving rod 21. However, the cooling position is not limited to such a position, and any position is allowed as long as the sample boat moving rod 21 may be cooled while preventing damage to the sealing member 25.

The control section 13 stops the driving of the motor 27, and causes the sample boat moving rod 21 to stay at the cooling position during a predetermined cooling time. The cooling time is set according to the temperature of the heating furnace 7. For example, the cooling time is automatically calculated by the control section 53 based on the set temperature of the heating furnace 7. For example, in the case where the set temperature of the heating furnace 7 is 900°C, the cooling time is set to 30 seconds. Also, in the case where the set temperature of the heating furnace 7 is 200°C, the cooling time is set to 10 seconds. Additionally, a sensor for measuring the temperature of the heating furnace 7 may be installed, and the cooling time may be calculated based on the measured temperature of the heating furnace 7.

The calculation method of the cooling time may, for example, use a function determined in advance indicating the relationship between the temperature of the heating furnace 7 and the cooling time, or a table indicating the relationship between the temperature of the heating furnace 7 and the cooling time.

After the lapse of the cooling time, the control section 13 controls the driving of the motor 27, and pulls the sample boat moving rod 21 back to the sample boat installation position (a position where the sample boat 29 is to be replaced). At this time, the sample boat moving rod 21 is cooled sufficiently not to damage the sealing member 25.

When the operation of the sample boat moving rod 21 is performed manually by an operator, the sample boat moving rod 21 may sometimes be pulled back to the sample boat installation position before it is sufficiently cooled.

In contrast, the sample heating device 51 may eliminate insufficient cooling of the sample boat moving rod 21 caused by an erroneous operation of the operator. Accordingly, the sample heating device 51 is able to prevent damage to the sealing member 25 caused by insufficient cooling of the sample boat moving rod 21. Also, in terms of safety, an effect of preventing burn injury of the operator may be achieved.

Furthermore, the cooling time when the sample boat moving rod 21 is to remain at the cooling position is determined according to the temperature of the heating furnace 7, and thus, when the heating furnace 7 is set to a low temperature, the cooling time is shorter compared with when the heating furnace 7 is set to a high temperature. Accordingly, the sample heating device 51 may realize reduction in the time of pulling back the sample boat 29 from the combustion tube 5, and moreover, reduction in the measurement time.

In the sample heating device described above, after pulling back the sample boat moving rod 21 to the cooling position, the control section 53 stops the driving of the motor 27, and causes the sample boat moving rod 21 to stay at the cooling position during a predetermined cooling time, but the pull-back operation for the sample boat moving rod 21 is not limited thereto.

For example, a plurality of cooling positions may be provided, or the cooling position may be set to a partial range of the stroke of the sample boat moving rod.

In the case where a plurality of cooling positions are provided, the sample boat moving rod is stopped at each cooling position, and is intermittently pulled back.

Also, in the case where the cooling position is set to a partial range of the stroke of the sample boat moving rod, the sample boat moving rod is moved relatively slowly in the range of the cooling position, and is cooled.

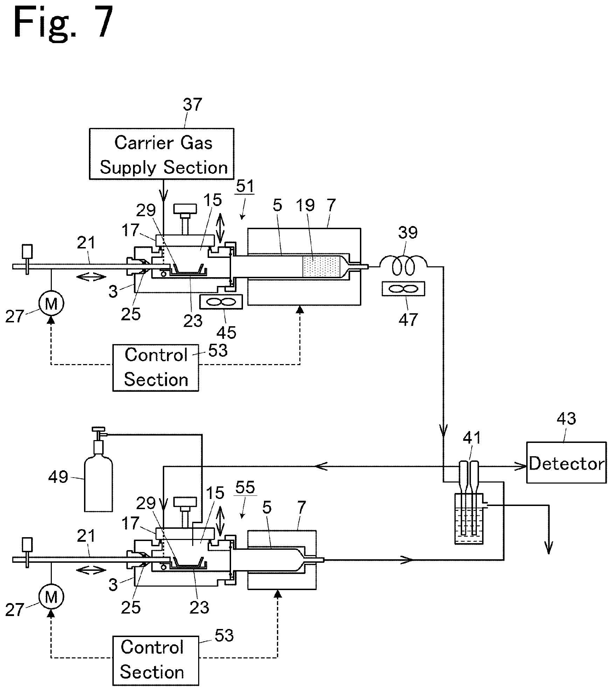

Fig. 7 is a schematic configuration diagram for describing an elemental analyzer not forming part ot the present invention. In Fig. 7, parts serving the same functions as in Fig. 5 are denoted with the same reference signs, and detailed description thereof is omitted.

The TOC meter shown in the figure includes a sample heating device 51 for TC measurement, and a sample heating device 55 for IC measurement. When compared with the embodiment of the TOC meter shown in Fig. 5, this TOC meter includes the sample heating device 51 instead of the sample heating device 1 in Fig. 5, and includes the sample heating device 55 instead of the sample heating device 35 in Fig. 5.

The sample heating device 51 for TC measurement is the same as the one described with reference to Fig. 6.

The flow of carrier gas at the TOC meter and the operation of the sample heating device 51 for TC measurement are the same as the flow of carrier gas and the operation of the sample heating device 1 for TC measurement described with reference to Fig. 5. However, the operation of pulling back the sample boat moving rod 21 that is performed after TC measurement is ended is performed by the control section 53 of the sample heating device 51. The pull-back operation for the sample boat moving rod 21 under control of the control section 53 is as described with reference to Fig. 6.

The structure of the sample heating device 55 for IC measurement is basically the same as that of the sample heating device 51 for TC measurement. Parts of the sample heating device 55 for IC measurement serving the same functions as those of the sample heating device 51 for TC measurement are denoted with the same reference signs as for the sample heating device 51 for TC measurement.

The operation of the sample heating device 55 for IC measurement is the same as the operation of the sample heating device 35 for IC measurement described with reference to Fig. 5. However, the operation of pulling back the sample boat moving rod 21 that is performed after IC measurement is ended is performed by the control section 53 of the sample heating device 55. The pull-back operation for the sample boat moving rod 21 under control of the control section 53 is as described with reference to Fig. 6.

Additionally, at the sample heating device 51 for TC measurement, the furnace temperature of the heating furnace 7 is set to, for example, 900°C. Also, at the sample heating device 55 for IC measurement, the heating temperature of the heating furnace 7 is set to a relatively low temperature of 200°C, for example, compared with the heating furnace 7 of the sample heating device 51 for TC measurement.

At the sample heating device 51 for TC measurement and the sample heating device 55 for IC measurement, the control sections 53 cause the sample boat moving rods 21 to stay at the cooling positions during the cooling time according to the temperatures of the heating furnaces 7. Accordingly, the cooling time at the sample heating device 55 for IC measurement is shorter compared with the cooling time at the sample heating device 51 for TC measurement. The time required to pull back the sample boat moving rod 21 at the sample heating device 55 for IC measurement is shorter than the time required to pull back the sample boat moving rod 21 at the sample heating device 51 for TC measurement.

Heretofore, embodiments of the present invention have been described, but the structures, arrangements, numerical values, and the like in the embodiments are only exemplary, and the present invention is not limited thereto, and various modifications may be made within the scope of the present invention described in the claims.

The sample heating device and the elemental analyzer of the present invention, for example, may be applied to elemental analyzers other than TOC meters.

The sample heating device of the present invention may be applied to a sample heating device having any configuration as long as it includes a sample injection section including an inner space to which carrier gas is supplied, and a sample boat gateway opening/closing mechanism, a combustion tube, connected to the inner space of the sample injection section, into which carrier gas flows from the inner space, a heating furnace for heating the combustion tube, and a boat operation mechanism for moving a sample boat arranged inside the inner space of the sample injection section into the combustion tube by a sample boat moving rod that is operable from outside the inner space, while maintaining air-tightness of the inner space by a sealing member.

The elemental analyzer of the present invention may be applied to an elemental analyzer having any configuration as long as it includes a sample heating device as described above, a carrier gas supply section for supplying carrier gas to the sample heating device, and a detector for detecting a target component, in a sample contained in the sample boat, flowing out from the combustion tube of the sample heating device together with carrier gas.

For example, the sample heating device and the elemental analyzer of the present invention may be applied to an elemental analyzer for measuring carbon, hydrogen, nitrogen, sulfur, or the like contained in a sample. Also, examples of a liquid sample are environmental water such as river water, lake water, seawater, rainwater, groundwater, and the like, and liquid samples produced by various experiments and researches. Moreover, examples of a solid sample are soil, sediment, agricultural and livestock products, and solid samples produced by various experiments and researches. However, the target measurement components, liquid samples, and solid samples of the sample heating device and the elemental analyzer of the present invention are not limited to the above.

In the embodiments described above, the temperature sensor 11 is a thermocouple, but the temperature sensor of the sample heating device of the present invention is not limited thereto. The temperature sensor of the sample heating device of the present invention may be any temperature sensor as long as it is capable of measuring the temperature of the sample boat moving rod.

In the embodiments described above, the temperature measurement position for the sample boat moving rod 21 by the temperature sensor 11 is inside the inner space 15, but the temperature measurement position for the sample boat moving rod of the sample heating device of the present invention is not limited thereto. At the sample heating device of the present invention, the temperature measurement position for the sample boat moving rod by the temperature sensor may be any position as long as the temperature of the sample boat moving rod at the contact position with the sealing member may be grasped at the position. For example, the temperature measurement position for the sample boat moving rod by the temperature sensor may be outside the sample injection section, or may be inside a through hole for the sample boat moving rod provided to the sample injection section.

Furthermore, the driving means for moving the sample boat moving rod may be driving means other than the motor.

### EXPLANATION OF REFERENCE LETTERS

- 1, 31, 35, 51, 55:: Sample heating device
- 3:: Sample injection section
- 5:: Combustion tube
- 7:: Heating furnace
- 9:: Sample boat operation mechanism
- 11:: Temperature sensor
- 13, 53:: Control section
- 15:: Inner space
- 17:: Sample boat gateway opening/closing mechanism
- 21:: Sample boat moving rod
- 25:: Sealing member
- 27:: Motor
- 29:: Sample boat
- 37:: Carrier gas supply section
- 43:: Detector

## Claims

1. A sample heating device (1) comprising:
a sample injection section (3) including an inner space (15) configured to have carrier gas supplied thereto, and a sample boat gateway opening/closing mechanism (17);
a combustion tube (5), connected to the inner space of the sample injection section, configured to receive a flow of the carrier gas from the inner space;
a heating furnace (7) for heating the combustion tube;
a control section (13); and
a boat operation mechanism (9) for moving a sample boat (29) arranged inside the inner space of the sample injection section into the combustion tube and back towards the sample injection section by a sample boat moving rod (21) that is operable from outside the inner space, while maintaining air-tightness of the inner space by a sealing member (25), wherein the sealing member is arranged between the sample injection section and the sample boat moving rod with the sample boat moving rod contacting the sealing member, wherein the boat operation mechanism includes driving means (27) for moving the sample boat moving rod according to an instruction from the control section; and
a temperature sensor (11) for measuring a temperature of the sample boat moving rod;
wherein the control section is configured to cause the driving means (27) to move the sample boat moving rod while controlling, based on a measured temperature value of the temperature sensor, an amount of pull-back in such a way that the sample boat moving rod only contacts the sealing member at a temperature at or below a predetermined temperature, at a time of pulling the sample boat moving rod such that a part of the sample boat moving rod which is located on a side of the combustion tube is pulled back towards the sample injection section.

2. The sample heating device of claim 1, wherein the temperature sensor (11) abuts the sample boat moving rod (21) inside the inner space (15).

3. The sample heating device of claim 2, wherein the control section (13) is configured to:
determine whether the temperature of the sample boat moving rod (21) at a position that is in contact with the temperature sensor (11) is at or below a predetermined temperature that is set in advance; and
if the temperature of the sample boat moving rod at the position that is in contact with the temperature sensor is at or below the predetermined temperature, cause the driving means (27) to move the sample boat moving rod towards the sample injection section (3) by a predetermined distance that is set in advance.

4. An elemental analyzer comprising:
the sample heating device (1) according to any one of claims 1 to 3;
a carrier gas supply section (37) for supplying carrier gas to the sample heating device; and
a detector (43) for detecting a target component, in a sample contained in the sample boat (29), flowing out from the combustion tube (5) of the sample heating device together with carrier gas.

## Patentansprüche

1. Probenerhitzungsvorrichtung (1), umfassend:
einen Probeninjektionsabschnitt (3), der einen Innenraum (15), der zum Zuführen von Trägergas in diesen konfiguriert ist, und einen Probenschiffchenzugangs-Öffnungs-/Schließ-Mechanismus (17) umfasst;
ein Verbrennungsrohr (5), das mit dem Innenraum des Probeninjektionsabschnitts verbunden ist, der zum Aufnehmen eines Stroms des Trägergases aus dem Innenraum konfiguriert ist;
einen Heizofen (7) zum Erhitzen des Verbrennungsrohrs;
einen Steuerungsabschnitt (13); und
einen Schiffchenbetätigungsmechanismus (9) zum Bewegen eines Probenschiffchens (29), das im Innenraum des Probeninjektionsabschnitts angeordnet ist, in das Verbrennungsrohr hinein, und zurück in Richtung des Probeninjektionsabschnitts durch eine Probenschiffchenbewegungsstange (21), die von außerhalb des Innenraums betätigbar ist, während die Luftdichtigkeit des Innenraums durch ein Abdichtelement (25) aufrechterhalten wird, wobei das Abdichtelement zwischen dem Probeninjektionsabschnitt und der Probenschiffchenbewegungsstange angeordnet ist, wobei die Probenschiffchenbewegungsstange das Abdichtelement berührt, wobei der Schiffchenbetätigungsmechanismus ein Antriebsmittel (27) zum Bewegen der Probenschiffchenbewegungsstange gemäß einem Befehl von dem Steuerungsabschnitt umfasst; und
einen Temperatursensor (11) zum Messen einer Temperatur der Probenschiffchenbewegungsstange;
wobei der Steuerungsabschnitt konfiguriert ist, zu bewirken, dass das Antriebsmittel (27) die Probenschiffchenbewegungsstange bewegt, während auf Basis eines gemessenen Temperaturwerts des Temperatursensors ein Rückziehausmaß derart gesteuert wird, dass die Probenschiffchenbewegungsstange lediglich das Abdichtelement bei einer Temperatur bei oder unterhalb einer vorbestimmten Temperatur berührt, und zwar zu einem Zeitpunkt, in dem die Probenschiffchenbewegungsstange derart gezogen wird, dass ein Teil der Probenschiffchenbewegungsstange, der auf einer Seite des Verbrennungsrohrs angeordnet ist, zurück in Richtung des Probeninjektionsabschnitts gezogen wird.

2. Probenerhitzungsvorrichtung nach Anspruch 1, wobei der Temperatursensor (11) an der Probenschiffchenbewegungsstange (21) im Inneren des Innenraums (15) anliegt.

3. Probenerhitzungsvorrichtung nach Anspruch 2, wobei der Steuerungsabschnitt (13) für Folgendes konfiguriert ist:
Bestimmen, ob die Temperatur der Probenschiffchenbewegungsstange (21), die sich in einer Position in Kontakt mit dem Temperatursensor (11) befindet, bei oder unterhalb einer vorbestimmten Temperatur ist, die im Voraus eingestellt worden ist; und
wenn die Temperatur der Probenschiffchenbewegungsstange, die sich in einer Position in Kontakt mit dem Temperatursensor befindet, bei oder unterhalb der vorbestimmten Temperatur ist, Bewirken, dass das Antriebsmittel (27) die Probenschiffchenbewegungsstange in Richtung des Probeninjektionsabschnitts (3) um einen vorbestimmten Abstand bewegt, der im Voraus eingestellt worden ist.

4. Elementaranalysator, umfassend:
die Probenerhitzungsvorrichtung (1) gemäß einem der Ansprüche 1 bis 3;
einen Trägergaszufuhrabschnitt (37), um der Probenerhitzungsvorrichtung Trägergas zuzuführen; und
einen Detektor (43) zum Detektieren einer Zielkomponente, und zwar in einer Probe, die in dem Probenschiffchen (29) enthalten ist, die gemeinsam mit dem Trägergas aus dem Verbrennungsrohr (5) der Probenerhitzungsvorrichtung herausströmt.

## Revendications

1. Dispositif de chauffage d'échantillon (1) comprenant :
une section d'injection d'échantillon (3) comprenant un espace interne (15) configuré pour avoir un gaz porteur fourni à ce dernier, et un mécanisme d'ouverture / fermeture de porte de nacelle à échantillon (17) ;
un tube de combustion (5) raccordé à l'espace interne de la section d'injection d'échantillon, configuré pour recevoir un écoulement du gaz porteur depuis l'espace interne ;
un four de chauffage (7) pour chauffer le tube de combustion ;
une section de commande (13) ; et
un mécanisme d'actionnement de nacelle (9) pour déplacer une nacelle à échantillon (29) agencée à l'intérieur de l'espace interne dans la section d'injection d'échantillon dans le tube de combustion et revenir vers la section d'injection d'échantillon par une tige de déplacement de nacelle à échantillon (21) qui peut être actionnée depuis l'extérieur de l'espace interne, tout en mmaintenant l'étanchéité à l'air de l'espace interne par un élément d'étanchéité (25), dans lequel l'élément d'étanchéité est agencé entre la section d'injection d'échantillon et la tige de déplacement de nacelle à échantillon avec la tige de déplacement de nacelle à échantillon en contact avec l'élément d'étanchéité, dans lequel le mécanisme d'actionnement de nacelle comprend un moyen d'entraînement (27) pour déplacer la tige de déplacement de nacelle à échantillon selon une instruction provenant de la section de commande ; et
un capteur de température (11) pour mesurer une température de la tige de déplacement de nacelle à échantillon ;
dans lequel la section de commande est configurée pour amener le moyen d'entraînement (27) à déplacer la tige de déplacement de nacelle à échantillon tout en commandant, sur la base d'une valeur de température mesurée du capteur température, une quantité de rappel de sorte que la tige de déplacement de nacelle à échantillon est uniquement en contact avec l'élément d'étanchéité à une température égale ou inférieure à une température prédéterminée, au moment de la traction de la tige de déplacement de nacelle à échantillon de sorte qu'une partie de la tige de déplacement de nacelle à échantillon qui est positionnée sur un côté du tube de combustion, est tirée à nouveau vers la section d'injection d'échantillon.

2. Dispositif de chauffage d'échantillon selon la revendication 1, dans lequel le capteur de température (11) vient en butée contre la tige de déplacement de nacelle à échantillon (21) à l'intérieur de l'espace interne (15).

3. Dispositif de chauffage d'échantillon selon la revendication 2, dans lequel la section de commande (13) est configurée pour :
déterminer si la température de la tige de déplacement de nacelle à échantillon (21) dans une position qui est en contact avec le capteur de température (11), est égale ou inférieure à une température prédéterminée qui est déterminée à l'avance ; et
si la température de la tige de déplacement de nacelle à échantillon dans la position qui est en contact avec le capteur de température est égale ou inférieure à la température prédéterminée, amener le moyen d'entraînement (27) à déplacer la tige de déplacement de nacelle à échantillon vers la section d'injection d'échantillon (3) selon une distance prédéterminée qui est déterminée à l'avance.

4. Analyseur élémentaire comprenant :
un dispositif de chauffage d'échantillon (1) selon l'une quelconque des revendications 1 à 3 ;
une section d'alimentation en gaz porteur (37) pour fournir le gaz porteur au dispositif de chauffage d'échantillon ; et
un détecteur (43) pour détecter un composant cible, dans un échantillon contenu dans la nacelle à échantillon (29), s'écoulant à partir du tube de combustion (5) du dispositif de chauffage d'échantillon conjointement avec le gaz porteur.
